# EUROPEAN PATENT APPLICATION

(11) **EP 0 661 594 A1**
(43) Date of publication of application: **05.07.1995**
(21) Application number: 94202477.9
(22) Date of filing: 30.08.1994
(51) Int. Cl.: G03C 5/395, G03D 3/06, B01J 47/00

(54) **Photographic processor with an ion-exchange cell**

(30) Priority: 07.09.1993 EP 93202601
(71) Applicant: AGFA-GEVAERT naamloze vennootschap, B-2640 Mortsel (BE)
(72) Inventor: Overbergh, Patrick, Septestraat 27, B-2640 Mortsel (BE); Michiels, Frank, Septestraat 27, B-2640 Mortsel (BE)

(57) **Abstract**

A photographic processor (10) which is provided with an ion-exchange resin cell (20) for recovering silver from rinse water leaving the rinsing station of the processor, wherein a liquid buffer station (18) between the rinsing station and the resin cell, and flow control means (19) to control the rate of flow of rinse water flowing from the buffer station to the resin cell are provided.

## Description

### BACKGROUND OF THE INVENTION

### Field of the invention.

The present invention relates to a photographic processor which is provided with an ion-exchange resin cell for recovering silver from photographic rinse water leaving the rinsing station of the processor, in order to reduce the silver content of effluent water.

### Description of the prior art.

To recover silver from photographic rinse water, there are the following available alternatives : electrolytic recovery, metallic replacement, precipitation and ion-exchange. It has been established that ion-exchange is the least expensive and also the most effective technique for reducing the silver content to a rate that is low enough for effluent water.

Ion-exchange can be defined as a reversible exchange of ions between a solid (resin) and a liquid (water containing ionised salts). Silver in the rinse water is in the ionised form of silver complexes, more particularly silver thiosulphate compounds, e.g. [Ag(S₂O₃)₂]⁻³ and [Ag(S₂O₃)₃]⁻⁵. Conventionally, to recover the silver, a strong base anion-exchange resin is used. In this resin, chloride is the mobile ion and it exchanges with the silver thiosulphate to release a chloride ion while capturing the silver complex, e.g. according to the following scheme :

3 [R]⁺Cl + [Ag(S₂O₃)₂]⁻³ → [R]₃⁺[Ag(S₂O₃)₂]⁻³ + 3 Cl⁻

A serious problem encountered with ion-exchange of photographic rinse water is that the resin becomes clogged and restricts the liquid flow. One cause for clogging of the resin is gelatin but other matter such as dextranes is responsible as well for clogging and for premature failure of the resin cell.

It has been proposed to operate with flow and counterflow through the resin. Rinse water flows through the resin in a first column to the bottom, the silver becoming captured by the resin and the gelatin becoming physically deposited on the resin. From the bottom of this first column, the water is fed through the bottom of a second column where it vigorously agitates the resin and washes out the entrapped gelatin. After some time the flow through the columns is reversed so that the second column acts as the silver-is disclosed in SMPTE Journal, Vol. 86, No. 2, Feb. 1977, pages 65 to 68, relating to the processing of cinefilm.

A similar method, wherein rinse water is used to fluidize a resin bed and wash out the entrapped gelatin is disclosed in the Journal of Imaging Technology, Vol. 10, No. 6, December 1984, pages 244 to 246. Also in this case two resin columns are used in series, the liquid flow being reversed periodically.

The mentioned installations perform properly in practice, but are expensive because of the pressurised columns and the valves that are required to reverse the liquid flow.

In US-A-5 133 846 of Agfa-Gevaert N.V. there is disclosed a silver recovery device for recovering silver from rinse water from a processor for photographic film sheets by means of a fluidised bed of ion-exchange resin, which comprises a cartridge partially filled with ion-exchange resin, and circulation pump means for pumping rinsing water upwardly and continuously through the cartridge during the operative periods of the processor and intermittently during its inoperative periods. The system produces a fluidised bed of ion-exchange resin in the cartridge which is advantageous for liberating gelatin that might have been deposited on the resin and tends to clog the mass of resin. We now have discovered that this measure does not always yield satisfactory results because apparently gelatin is not the only disturbing agent for the ion-exchange resin. All kinds of harmful agents such as inorganic products, dead biological matter, etc. reduce the effective surface of the resin as well, and this in proportion with the velocity of liquid through the resin.

We further have found that there exists a phenomenon which we will call hereinafter preferential channel formation which means that liquid does not blow at equal velocities at all points of a cross-sectional area of a mass of ion-exchange resin but, on the contrary, flows at substantially increased velocities at local cross-sectional zones in the form of tiny sub-currents seeking an easy way through the resin mass. The contact time liquid/resin is correspondingly reduced so that the capacity of the device decreases. The described phenomenon increases with the speed of the liquid through the resin.

### SUMMARY OF THE INVENTION

### Objects of the invention

One object of the present invention is a photographic processor which is provided with an ion-exchange resin cell the capacity of which is less rapidly reduced than that of prior art devices.

A further object of the invention is a processor of the type referred to which can operate with a smaller ion-exchange cell than prior art devices (for a given rate of rinse water per unit of time), so that the cost of such cell is less, and also the pump for pumping the rinse liquid through such cell is correspondingly smaller and thus less expensive.

### Statement of the invention.

In accordance with the present invention, a photographic processor, which is provided with an ion-exchange resin cell for recovering silver from rinse water leaving the rinsing station of the processor, is characterised in that it comprises a rinse liquid buffer station between the rinsing station and the ion-exchange cell, and flow control means to control the rate of flow of rinse water from the buffer station to the ion-exchange cell.

The presence of the buffer station allows to keep the velocity of the rinse water, or in other words its rate of flow, through the ion-exchange device relatively small, whereas the flow rate of rinse water received from the processor during the processing of a photographic sheet may remain unaltered so that the processing capacity of the processor is not impeded by the reduced ion exchanging capacity. The buffer station buffers the excess of rinse water during the processing of the photographic material. Buffering can go on for some minutes to tens of minutes, depending on the rate of occupation of the processor. Usual rates of occupation of a processor are between .. % and .. %. It is clear that if a processor is occupied uninterruptedly until exhaustion of its occupation rate, e.g. during 12 Hrs for a daily occupation rate of 50 %, the capacity of the buffer station would be unsufficient. However, such situation does not occur in normal practice since processing is spread over a working day.

According to an embodiment of the invention, the liquid flow through the ion-exchange cell is upwardly, and the rate of flow of rinse water through said cell is such that no fluidised bed is formed. The upward flow is very advantageous for the removal of air bubbles entrapped in the resin. Air bubbles are undesired since they reduce the rate of flow through the device. The absence of a fluidised bed allows an ion-exchange cell to be filled with resin up to a higher degree than devices that are operated with a fluidised bed of resin.

According to a further embodiment of the invention, the velocity of rinse water through the ion-exchange resin cell is smaller than 5 cm.min⁻¹, and even more preferably smaller than 0.5 cm.min⁻¹. Such velocities stand for the average velocity of liquid through the cell, calculated by dividing the rate of flow (1.min⁻¹) by the cross-sectional area of the resin mass, and thus such velocity does not exclude the existence in certain circumstances of small sub-currents of larger velocity, as described hereinbefore. This reduced flow rate has the advantage that almost no preferential channel forms in the mass of resin.

An additional advantage of the buffer station in accordance with the invention is that it operates as a pre-filter to partially remove gelatin and other components from the rinse water. As a matter of fact, it has been shown that in operation the bottom of the buffer station becomes progressively loaded with such components. This means that these components are not carried along up to the ion-exchange resin so that undesired loading thereof is less.

According to a still further embodiment of the invention, the flow-control means is constituted by a displacement pump.

### BRIEF DESCRIPTION OF THE DRAWINGS

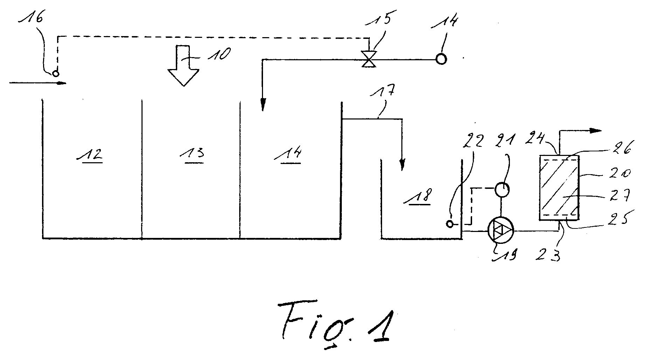

The invention will be described hereinafter by way of example with reference to the accompanying drawing wherein Fig. 1 is a diagrammatic representation of one embodiment of a photographic processor in accordance with the present invention.

### Detailed description of the invention

Fig. 1 shows diagrammatically one embodiment of a photographic processor. The apparatus (10) comprises a developing station 12, a fixing station 13, a rinsing station 14 and a drier, not shown. Means for ensuring the satisfactory operation of the processor but not necessary for the understanding of the present invention are not shown. Such means can be heating means for the processing liquids in the different tanks, pumps for the circulation of these liquids, replenishing and/or rejuvenation means for them, a silver recuperator for removing silver from the fixing liquid, liquid-level controls, etc.

Rinsing station 14 is provided with rinse water from a tap supply 14 under control of a valve 15. Valve 15 is suitably controlled by a sensor 16 which is responsive to the amount of sheet material being processed.

The term "amount" should be interpreted in the broadest possible sense. It covers a simple sensor which measures the length only of a processed sheet (by multiplication of measured time by speed of transport) and thereby gives indications which are independent from the width of the sheet and thereby are not accurate, as well as a row of sensors that extend widthwise of the processor and give an indication of the length as well as of the width of the sheets.

A particularly interesting embodiment of sensing means is disclosed in our copending application EP 92 202 463.3 and EP 92 202 462.5 both entitled "Photographic development apparatus" and filed August 11, 1992.

The addition of a certain amount of fresh rinse water to station 14 causes a corresponding discharge of used water via a suitable weir of the station as known in the art. The discharged water flows through conduit 17 in a buffer tank 18, which may be an open or a closed holder. Water is drawn from tank 18 by a displacement pump 19 and pumped through ion-exchange cell 20. The operation of pump 19 may be controlled by a controller 21 in response to the output signal of a level sensor 22 in buffer tank 18. Pump 19 is a bellow-type pump in the present embodiment, but it is clear that any other suitable pump such as a peristaltic pump, a gear pump, or a membrane pump can be used at this place.

Ion-exchange cell 20 is basically a cartridge or holder, preferably cylindrical and also preferably disposed vertically, with an inlet 23, an outlet 24 conducting e.g. to the sewer, and perforated inside end walls, e.g. in the form of nets 25 and 26 of plastic fabric, for restraining the mass of ion-exchange resin 27. More details about ion-exchange resin holders can be found in our co-pending applications EP-Al-0 430 323 entitled "Silver recovery device" and EP-A1-0 502 262 entitled "Ion-exchange resin holder".

The filling ratio of the space between nets 25 and 26 with ion-exchange resin amounts to approximately 95 %.

The following example illustrates the operation of the processor described hereinbefore.

| | |
|---|---|
| Processed photographic material | RAPILINE film, i.e. a fast graphic film manufactured by AGFA-GEVAERT N.V., Mortsel, Belgium, for line work |
| Consumption of rinse water | 0.25 l.m⁻² (i.e. approximately 0.25 l.min⁻¹ for the largest sheet format) |
| Contents of rinsing station 14 | 10 l |
| Contents of buffer tank 18 | 30 l |

| Ion-exchange cell: | |
|---|---|
| - inside diameter | 12 cm |
| - inside length | 30 cm |
| - volume between nets 25-26 | 2.84 l |
| - volume of ion-exchange resin | 2.7 l |
| Type of ion-exchange resin | LEWATIT, type M500 MB manufactured by BAYER AG, Germany |
| Rate of pump 19 adjustable between | 10 and 50 cc.min⁻¹ |
| Corresponding velocities of rinse water through cell 20, appoximately between | 0.088 and 0.442 cm.min⁻¹ |
| Silver effluent discharge | less than 0.5 mg Ag per liter of water. |

In operation of the installation, it was found that even the highest rinse liquid velocity did not produce a fluidised-bed situation in cell 20, i.e. the mass of resin was not displaced up to the upper net 26. This has the advantage of reduced risk for partial clogging, which can occur when the top of the resin mass is forced at relatively high velocity against the upper net 26. Further, there was a decreased preferential channel formation.

Further it was found that buffer tank 18 became gradually loaded with gelatin and other components present in the rinse water. It was estimated that these depositions could amount to approximately 99 % of the total mount of deposition (i.e. buffer + ion exchange cell) depending on the type of material and processing baths being used, which means a marked prolongation of the useful life of the resin.

The present invention is not limited to the described embodiment.

A liquid filter may be provided in the circuit of the rinsing station to the ion-exchange cell for extra removal of undesired matter that might impede the satisfactory operation of the cell.

The ion-exchange cell must not necessarily take a vertical position. It must not be a separate component but may be integrated in a larger housing, the resin being contained in a bag or cartridge, that removably fits in a corresponding holder in said housing.

The control of operation of the pump feeding the resin cell can be different. For instance, it can occur by the sensing means for determining the amount of photographic material being processed, the measured value being multiplied by a certain factor to obtain a time of operation of the pump which will be sufficient to handle the volume of rinsing liquid resulting from processing the material.

The rinsing station may comprise two or more distinct tanks, the liquid flow from one tank to the other being preferably opposed to the transport direction of the processed film sheets.

## Claims

1. A photographic processor (10) which is provided with an ion-exchange resin cell (20) for recovering silver from rinse water leaving the rinsing station (14) of the processor, characterised in that it comprises a liquid buffer station (18) between the rinsing station and the resin cell, and flow-control means (19) to control the rate of flow of rinse water flowing from the buffer station to the resin cell.

2. A processor according to claim 1, wherein the liquid flow through the resin cell (20) is upwardly, and the rate of flow of rinse water through said cell is such that no fluidised bed is formed.

3. A processor according to claim 1 or 2, wherein said flow control means is formed by a displacement pump (19).

4. A processor according to any of claims 1 to 3, wherein said rate of flow is such that the linear velocity of rinse water through the cell (20 is smaller than 5 cm.min⁻¹.

5. A processor according to claim 4, wherein said velocity is smaller than 0.5 cm.min⁻¹.
